# EUROPEAN PATENT APPLICATION

(11) **EP 1 378 712 A1**
(43) Date of publication of application: **07.01.2004**
(21) Application number: 03009992.3
(22) Date of filing: 02.05.2003
(51) Int. Cl.: F24D 1/08, F24D 10/00

(54) **Thermal fluid distribution assembly for one or more thermal circuits**

(30) Priority: 03.05.2002 IT GE20020036
(71) Applicant: Taccone, Giuseppe, 16134 Genova (IT)
(72) Inventor: Taccone, Giuseppe, 16134 Genova (IT)
(74) Representative: Maritano Maello, Giovanna

(57) **Abstract**

Thermal fluid distribution assembly (34) for one or more circuits, designed to be connected with a heat generator or a thermal exchanger, that it is pre-assembled and featuring specially arranged and interchangeable parts.

Said thermal fluid distribution assembly (34) is consisting of two manifolds (1, 2) that are aligned or placed side by side, on the upper portion of which the following elements are fitted: a first portion of a feed pipe (4) from a boiler (21), an end portion of a return pipe (5) to the boiler (21), one or more assemblies consisting of a first portion of a feed piping (32) to a circuit using the fluid, and an end portion (33) of a return piping from the circuit using the fluid.

The thermal fluid distribution assembly (34) includes all essential elements, such as a three-way mixing valve (11) and the connecting pipe (13, 20) between the three-way mixing valve (11) and the end portion of the return piping (33).

In the lower portion of the thermal fluid distribution assembly, and aligned with the feed (4) and return pipe (5) of the boiler (21), a condensate drain pipe (6) is fitted and set to be connected with a condensate pump (22).

## Description

This invention relates to a thermal fluid distribution assembly for one or more thermal circuits, to be supplied as a pre-assembled unit.

According to the known method, when installing a thermal system, for example a central thermal plant, in the majority of cases, the fluid distribution system is installed totally on site.

The main drawback of the known method is the fact that the installer, who needs to be very skilled in this matter, when there is no system engineering project, has to install the fluid distribution system on the basis of an impromptu functional design which, every time, has to be customized to the specific situation. Subsequently, he may go on with the other operations involving pressure testing, painting, and insulation.

Another drawback in the known method is that the installation of the central thermal plant takes a long time even to highly qualified workers. Indeed, all the piping and the other components are generally mounted on site, depending on the need, by qualified installers who have to work meticulously. This is actually a major drawback, since the most favourable period for the overhauling, installation, or maintenance of a central thermal heating plant - except when a brand new unit is installed - is during seasonal shutdown.

Another drawback in the known method is that, when there are several buildings all served by the same central thermal plant with only one central thermal regulation, no perfect thermal adjustment can be achieved in each one of the served buildings, since they have different locations, hence the building where the probe is placed will be favoured as against another building, which has a more unfavourable position, with regard to heating, or orientation.

All the above drawbacks have been overcome by this invention.

We wish to point out that, in spite of the high number and availability of many different types and models of boilers, burners, pumps, valves, etc., the connection of all the above components in the construction of a thermal system is always done with pipes, for thermal fluid flow.

It is the object of this invention to rationalise this system of pipes, to make it readily available for a great number of thermal systems (for example for central thermal plants), in full compliance with all applicable regulations on the adoption of energy saving devices, for systems with and without mixing valves.

Therefore, it is the object of this invention to design a thermal fluid distribution assembly for thermal systems, which will significantly reduce the time required to overhaul, install, and maintain for example a central thermal plant, and which will permit a quick and easy connection to the piping of the heat generator (whether a boiler or a heat exchanger) and to the piping of one or more circuits, and which is both reversible and small in size, thus inexpensive and simple to mount.

To this end, a thermal fluid distribution assembly was designed, according to this invention, which consists of an assembly of pre-assembled elements.

In order to achieve the set objective, a pre-assembled thermal fluid distribution assembly was designed with specially pre-arranged and interchangeable parts, consisting of two aligned - or placed side by side - manifolds on top of which the following parts are connected: a first portion of the feed pipe from the heat generator (hereinafter called feed pipe from the boiler), one end portion of the return pipe to the heat generator (hereinafter called return pipe to the boiler), one or more assemblies consisting of a first feed piping portion to a circuit where the fluid is employed (hereinafter called feed piping to the circuit), and an end portion of a return piping from a circuit where the fluid is employed (hereinafter called return piping from the circuit), which already includes all the necessary elements, such as a three-way mixing valve and a pipe connecting the three-way mixing valve with the return pipe end portion.

Some of the numerous advantages attainable with this invention are illustrated here below.

The main advantage of the thermal fluid distribution assembly according to this invention is that it can be installed with significant time saving, even by unskilled labour.

Another advantage of this invention is that the assembly is ready to mount, namely it has already been pressure tested and set to meet the requirements of different boiler performances.

A further advantage of this invention is that the thermal fluid distribution assembly is reversible, namely that the circuit connections can be mounted either on the right or on the left side, without any difference.

Another advantage is that the thermal fluid distribution assembly is compact, namely that it is small in size, thus needing little space for installation, which may be done on a wall or on legs resting on the floor at a comfortable height for those working on it when mounting or servicing the unit.

Another advantage of the thermal fluid distribution assembly according to this invention is that its components are interchangeable when they break or when the system has to be adjusted to meet different and new requirements.

Another advantage of this invention is that it is fitted with connections to blow off or load the system, even for separate circuits. Indeed, in case of breakdown, the circuit of one building can be blown off and then loaded again, without having to shut down the boiler.

Quite advantageously, the thermal fluid distribution assembly can also be adjusted for use as a substation in each building, when there is a system with several buildings served by one single central thermal plant. In this case, temperature regulation will be done separately in each building, by means of a probe and a thermal fluid distribution assembly placed in each of them, or a probe in each building and one central thermal fluid distribution assembly, with all manifolds placed in parallel to feed the individual circuits in each building.

Another advantage of the thermal fluid distribution assembly according to this invention is that it can be fitted with pre-formed insulating material, with subsequent time saving for the installer who, in order to comply with applicable mandatory regulations, would otherwise be required to carefully insulate the system on site.

According to this invention, all pipes connected with manifolds are placed at due distance from each other for proper insulation as required by applicable regulations.

Also, according to this invention, a pipe is connected in the lower end of the thermal fluid distribution assembly with its fittings aligned with the boiler feed and return pipes. This pipe, here after called condensate drain pipe, is fitted with a blow of unit. This condensate drain pipe is designed for connection with a condensate drain pump or boiler recycle pump, which connects the boiler feed with the return circuit. Since the fittings are aligned with the boiler feed and return pipes, a better flow impact on the thermostatic sensors of the heat generator will be advantageously attained, even when the mixing valve is closed.

On the feed piping to the circuit, after the intake on the manifold, the following components are installed: a shut-off valve, a pipe segment connecting said valve and a three-way mixing valve, followed by a pipe segment for connection with an electric circulator or main pump on the feed pipe to the system.

On the return piping from the circuit, after the intake on the manifold, the following components are installed: a shut-off valve followed by a tube connecting this shut-off valve with the three-way mixing valve and the return circuit from the system.

Joints between the various components are generally flanged, threaded or welded.

Plugs consisting of disks or end plates close the manifold ends and when there are two aligned manifolds, they share one intermediate disk or end plate.

For easier fluid temperature control, fittings for sensors are placed on the boiler feed and return pipes in diametrically opposite positions, so that the thermal fluid distribution assembly can be reversed, or for easier temperature reading by the operator.

When the thermal fluid distribution assembly is designed to feed one or more thermal circuits, for example in addition to the heating circuit with mixing valve (i.e. for heating elements, thermal coils, etc.) also another circuit (i.e. for sanitary hot water production, fan convectors, air heaters, etc.), other two fittings will be provided on the manifolds for the second circuit. In this case, a check valve will be installed on the return piping from the circuit before the shut-off valve, to ensure that, when the heating system is shut off, and the mixing valve is closed, no hot water will flow back from the second circuit up into the return pipe from the circuit. Hence, all the piping connecting the shut-off valve, the mixing valve, and the return circuit from the system is shorter.

When the thermal fluid distribution assembly works as a substation of a central thermal plant, the recycle pump will be placed between the boiler feed and return pipes, near the boiler itself, and in each substation the condensate drain pipe of the distribution assembly will be cut and valves, which are used to blow off and load the assembly, will be placed on the stumps. Also, a shut-off valve will be installed on the first segment of the boiler feed and return pipes of each thermal fluid distribution assembly, and between the thermal fluid distribution assembly and each single circuit, in order to segregate the thermal fluid distribution assembly and close any of the circuits that may need servicing, without having to shut down the boiler or involving any of the other substations.

When a thermal system is designed to feed several different circuits, both manifolds of the thermal fluid distribution assembly may be placed side by side and in parallel; they are connected with the boiler feed and return pipes, as well as with the assembly consisting of the feed and return piping of the circuits which use the fluid, and of any fittings, for further circuits, with or without a mixing valve.

According to a preferred embodiment of this invention, the elements making up the thermal fluid distribution assembly have been dimensioned to best meet the capacity requirements of the thermal system on which the thermal fluid distribution assembly is mounted. As a matter of fact, the assembly will be designed in three different sizes, with the assembly piping having 2" diameter and a 1½" three-way valve when employed on systems of up to 220,000 kcal capacity, with piping of 2½" diameter and a 2" three-way valve when employed on systems of up to 350,000 kcal capacity, and, for example, with 3" diameter piping and a 2½" three-way valve on systems of up to 500,000 kcal capacity. Manifolds feature two, preferably steel, cylinders with a diameter greater than the one of the pipes they feed or by which they are fed, for example of 4".

The valuable feature of having several interchangeable components can be attained by keeping the same distance between the fittings in all different versions, distance which in any case shall always allow for subsequent compulsory pipe insulation.

The advantages discussed above and others will appear clear from the description of the figures which are attached by way of illustration rather than limitation, in which:
Fig. 1 illustrates a front view of the thermal fluid distribution assembly set to be connected to a thermal system for one circuit, with condensate drain pipe;
Fig. 2 is a top view of the thermal fluid distribution assembly as illustrated in figure 1;
Fig. 3 is a side view of the thermal fluid distribution assembly as illustrated in figure 1;

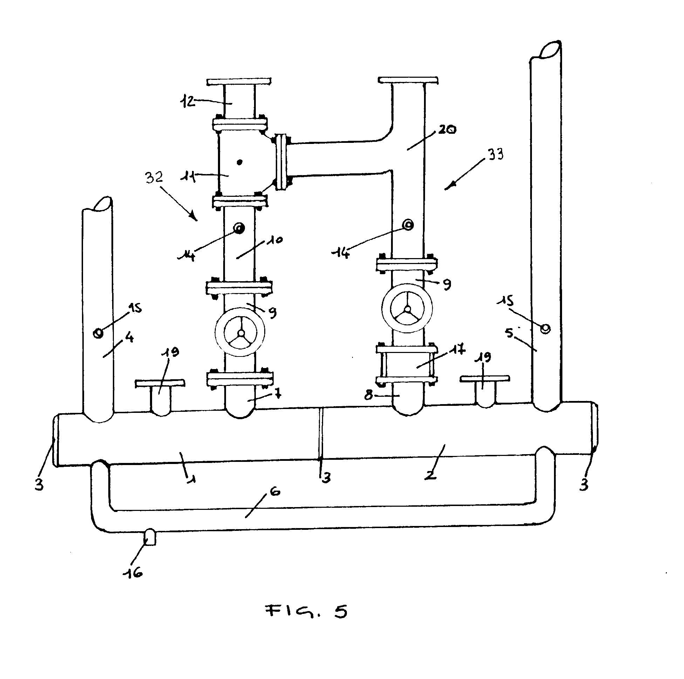

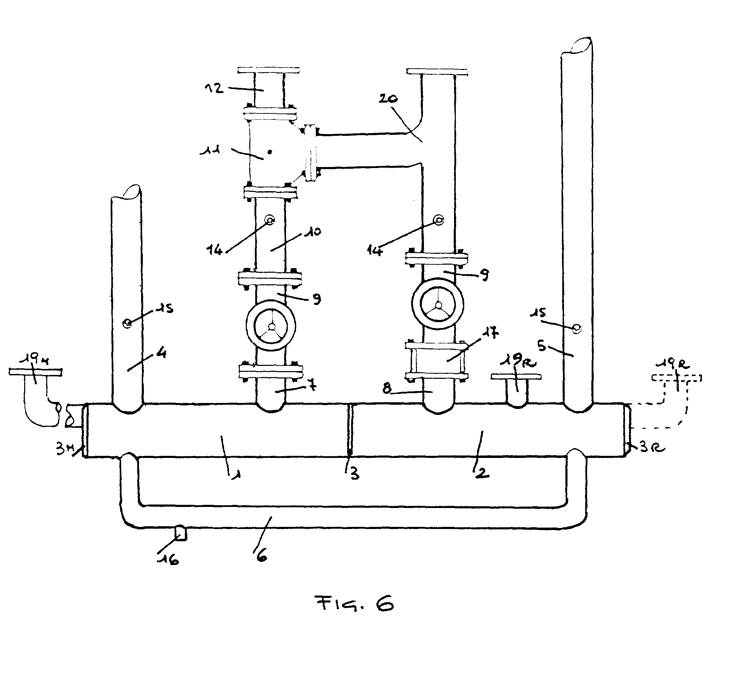

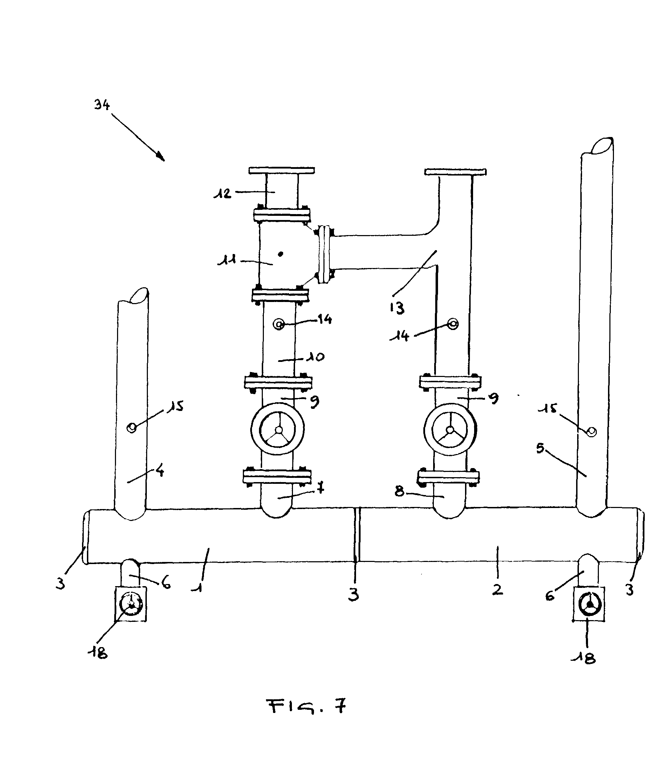

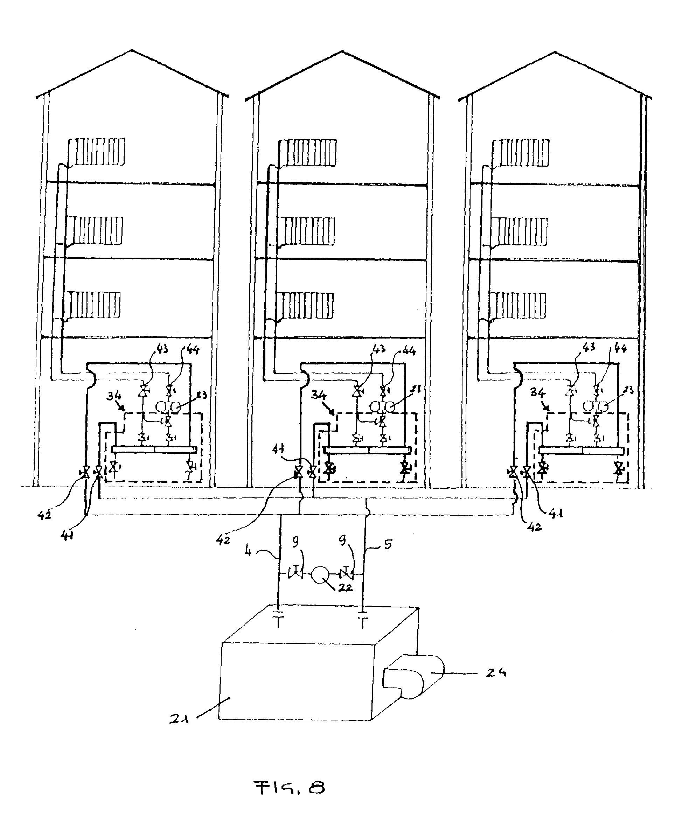

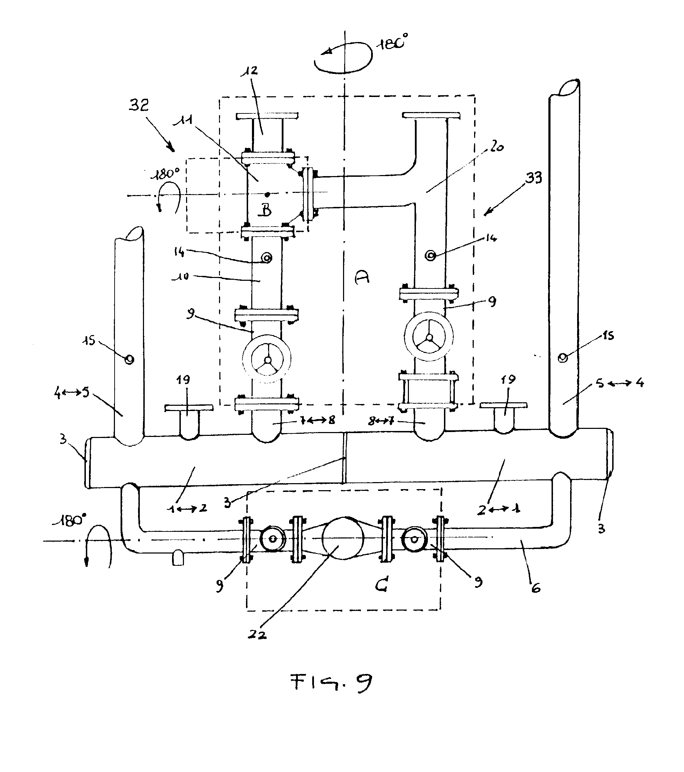

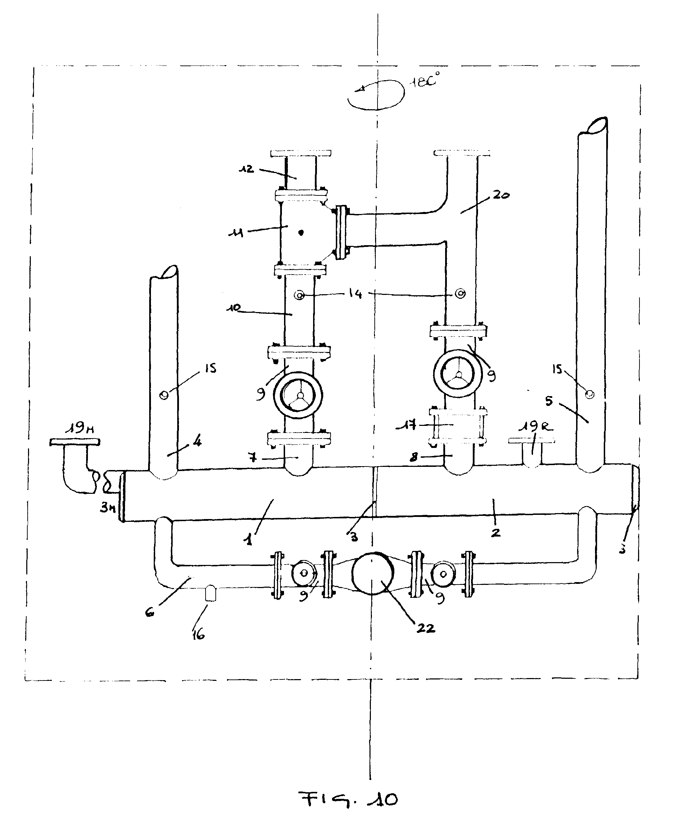

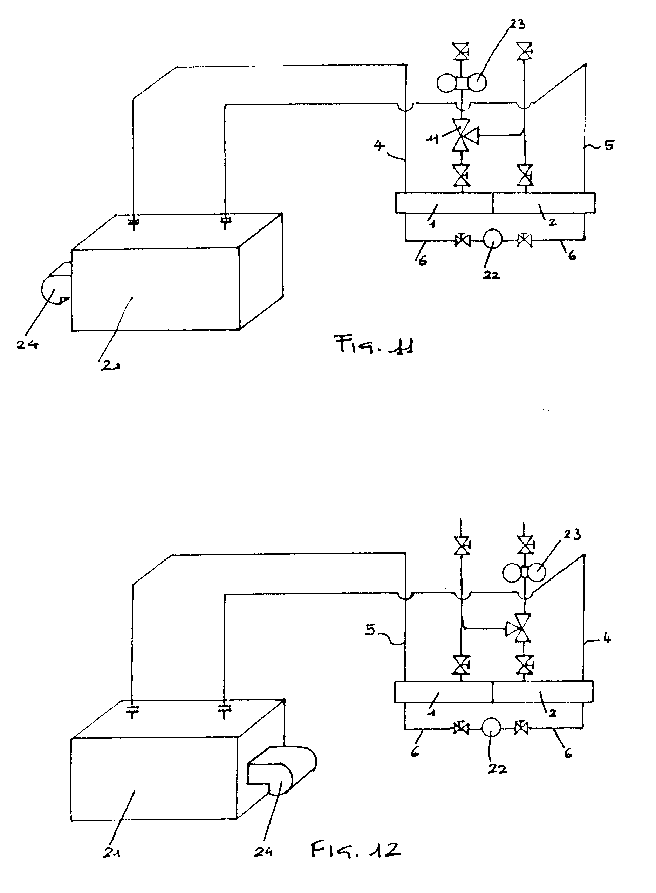

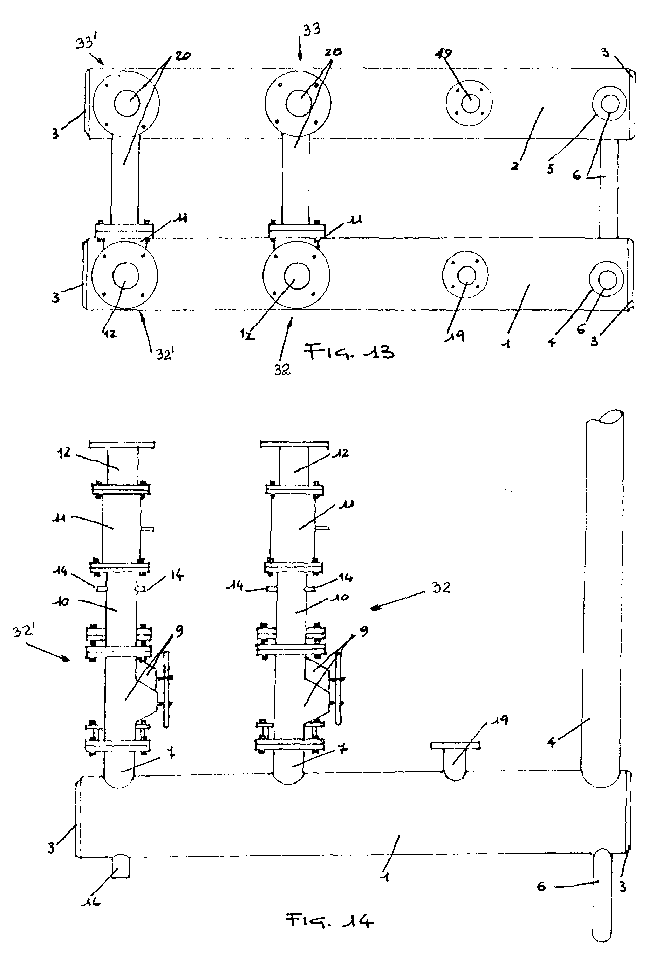

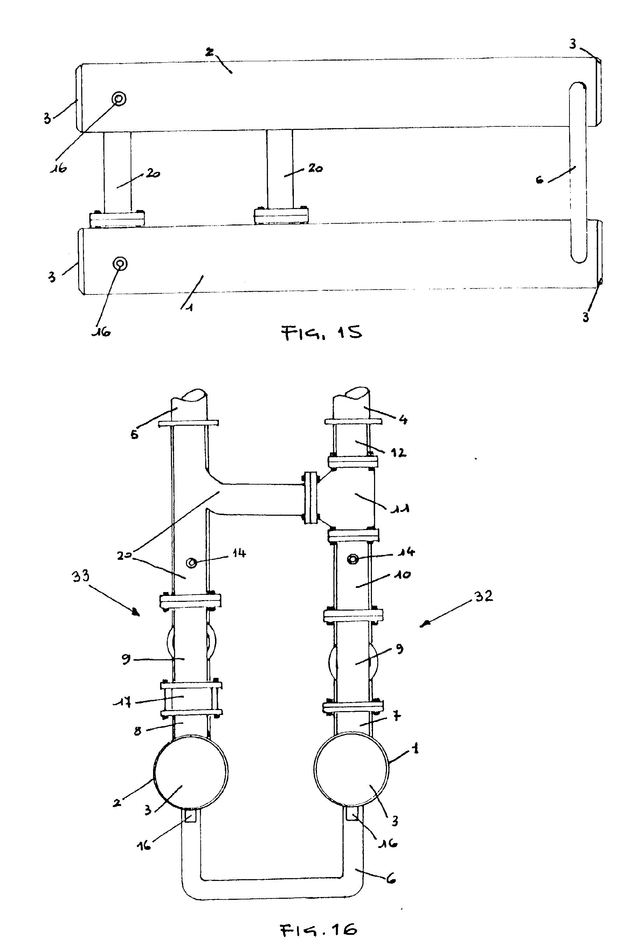

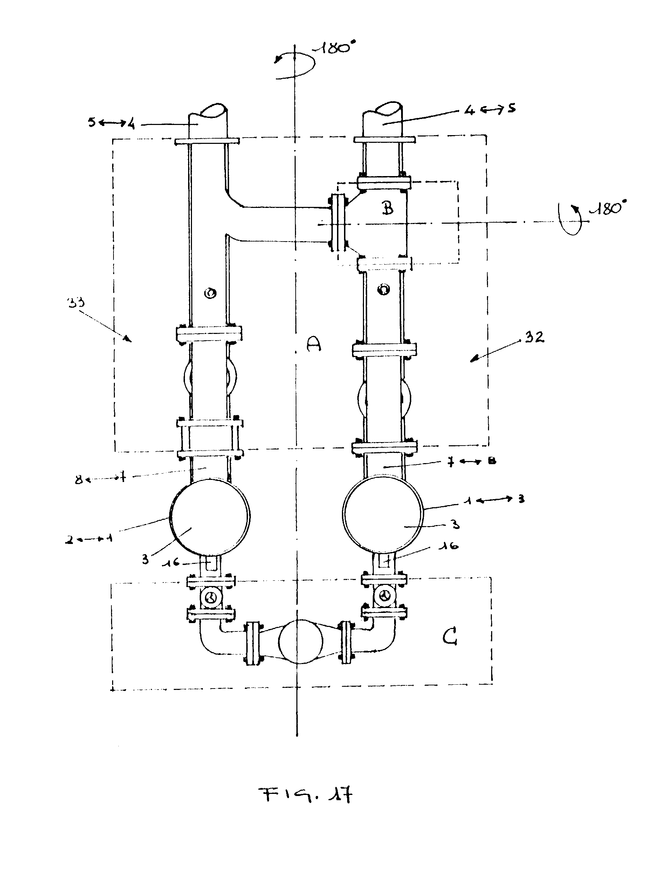

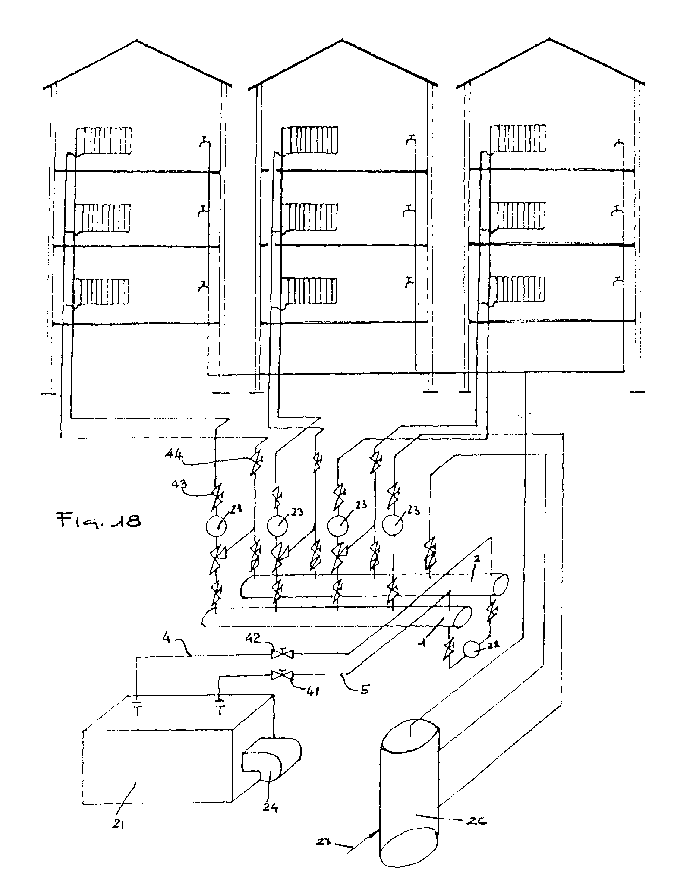

Fig. 4 is a bottom view of the thermal fluid distribution assembly as illustrated in figure 1;
Fig. 5 is a front view of the thermal fluid distribution assembly set to be connected with two circuits;
Fig. 6 shows another example of the thermal fluid distribution assembly, set to be connected with two circuits;
Fig. 7 shows the thermal fluid distribution assembly set to be employed as a substation where the condensate drain pipe fittings are turned into blow-offs fitted with valve;
Fig. 8 shows a thermal system diagram where the thermal fluid distribution assembly illustrated in figure 7 is used as a substation;
Fig. 9 shows the thermal fluid distribution assembly of figure 5, indicating the axes of rotation along which the components can be rotated in order to make the thermal fluid distribution assembly or the individual components reversible;
Fig. 10 shows the thermal fluid distribution assembly of figure 6, with indication of the axis of rotation along which the thermal fluid distribution assembly can be rotated in order to make the corresponding circuit fittings reversible.
Fig. 11 shows a diagram of the thermal fluid distribution assembly illustrated in figure 1;
Fig. 12 shows a diagram of the thermal fluid distribution assembly illustrated in figure 11, with a 180° rotation;
Fig. 13 shows a top view of a thermal fluid distribution assembly with manifolds placed side by side;
Fig. 14 shows a front view of the thermal fluid distribution assembly of figure 13;
Fig. 15 shows a bottom view of the thermal fluid distribution assembly of figure 13;
Fig. 16 shows a side view of the thermal fluid distribution assembly of figure 13.
Fig. 17 shows the thermal fluid distribution assembly illustrated in figure 16, with indication of the axes of rotation along which the components can be rotated in order to make the thermal fluid distribution assembly or the individual components reversible;
Fig. 18 shows a diagram of a central thermal fluid distribution assembly for thermal systems with manifolds arranged side by side.

In the different drawings, like numerals indicate like or corresponding parts throughout the several views.

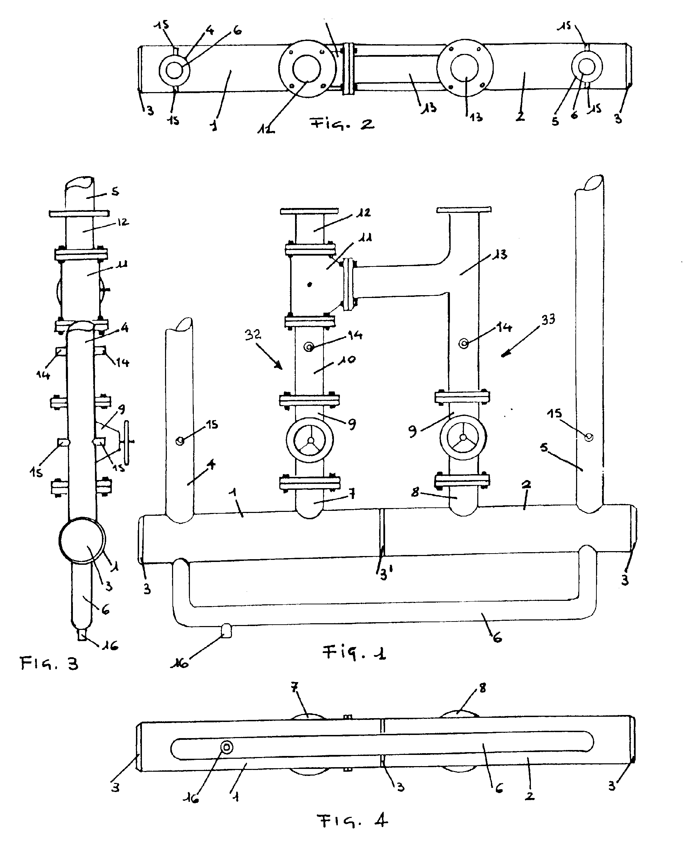

In figure 1 manifolds 1 and 2 are aligned, with their end portions closed with plugs, welded disks or end plates 3. The central portion of manifolds 1 and 2 is closed by one common welded disk or end plate 3'.

On manifold 1 the following components are installed: the feed pipe 4 from the boiler 21 (see Fig. 11) and the feed piping 32 to the circuit using the fluid.

On manifold 2 the following components are installed: the return pipe 5 to the boiler 21 and the return piping 33 from the circuit using the fluid.

On each of the feed 4 and return 5 pipes, in order to fit a sensor, two fittings 15 have been designed, on diametrically opposite positions, so that the sensor can be used both from the front or the back.

On the feed piping 32 of the circuit using the fluid, the following components are installed one after the other: an intake 7 on manifold 1, a shut-off valve 9, a connection pipe segment 10, a three-way mixing valve 11, and a pipe segment 12 for connection with an electric circulator or main pump 23 (see fig. 8).

On the connection pipe segment 10, two fittings 14 are placed on diametrically opposite positions for circuit blow-off and/or loading.

On the return piping 33 from the circuit using the fluid, the following components are installed one after the other: an intake 8 on manifold 2, a shut-off valve 9, a pipe 13 connecting said shut-off valve 9 with the three-way mixing valve 11 and the return circuit from the system. The connecting pipe 13 practically has a T shape, which is fitted on the return piping 33 from the circuit.

In the lower portion of the thermal fluid distribution assembly, aligned with the feed 4 and return pipes 5 from the boiler 21, the condensate drain pipe 6 is fitted, which is designed to receive a condensate pump 22 or a boiler recycle pump not illustrated in this figure (see fig. 9) which is mounted in between two shut-off valves 9. On the lower portion of the condensate drain pipe 6 a fitting 16 is mounted for the blow-off valve.

Figure 5 illustrates the thermal fluid distribution assembly designed, as a first example, for two circuits, the first one with mixing valve 11 and the other one without mixing valve. On manifolds 1 and 2, in addition to the feed 32 and return 33 pipings of a thermal circuit, also feed and return fittings 19 are set for a second circuit.

On the return piping 33 from the circuit using the fluid, before the shut-off valve 9, in this case a check valve 17 ( preferably of a plate valve type) is inserted, and after the shut-off valve 9, a connecting pipe 20 is installed, which is practically the same as the connecting pipe 13 in figure 1, but with a shorter lower portion to allow for insertion of valve 17. A fitting 19 is inserted between the feed pipe 4 from the boiler 21 and the feed piping 32 of the circuit using the fluid, the other fitting 19 is placed between the return pipe 5 to the boiler 21 and the return piping 33 from the circuit using the fluid.

In figure 6 the thermal fluid distribution assembly is illustrated, with the feed pipe fitting 19 M, of a second circuit, placed on the disk or end plate 3M; a dotted line shows the possible arrangement of the return pipe fitting 19R on the disk or end plate 3R. In this case, the feed pipe fitting 19M is not aligned with the disk or end plate 3M to ensure that no air pockets are formed. For the same reason, in the possible arrangement of the return pipe fitting 19R, there is no alignment with the disk or end plate 3R.

In figure 7 a thermal fluid distribution assembly 34 is illustrated, whose condensate drain pipe 6 has been cut and on the stumps of said pipe 6 blow-offs with valves 18 have been fitted, to blow off manifolds 1 and 2. With this embodiment, the thermal fluid distribution assembly can be used as a substation in a central thermal plant, of which a diagram is illustrated in figure 8.

In this case, the condensate pump 22 or the boiler recycle pump, each with related shut-off valves 9, will be placed near the boiler 21, between the feed pipe 4 from the boiler 21 and the return pipe 5 to the boiler 21.

In figure 8, individual thermal fluid distribution assemblies used as substations and contoured by a dotted line are all indicated with 34. Also the boiler 21, and the burner 24 are indicated, and in each single heating circuit the main circulation pump 23, shut-off valves 42 and 41 on the feed 4 and return pipes 5 of the boiler 21, shut-off valves 43 and 44 are indicated between the thermal fluid distribution assembly 34 and each single circuit.

With this layout, very little space is required to mount the thermal fluid distribution assembly in each building and, at the same time, each building has all the advantages deriving from a central thermal plant, without some of the disadvantages.

As indicated in figure 9, when the pipes are to be connected on site with fittings on the thermal fluid distribution assembly, differently from the diagram indicated in the previous figures, it is enough to rotate with a 180° rotation the various components A, B and C, which are indicated within the areas outlined by the dotted lines. With this easy operation, the fittings can be reversed to fit the corresponding circuits and the individual components.

Similarly, the thermal fluid distribution assembly becomes fully reversible by rotating it with a 180° rotation along the axis of rotation indicated in figure 10.

In these figures 9 and 10 the condensate pump 22 or the boiler recycle pump has been indicated, which is mounted in between two shut-off valves 9.

Figures 11 and 12 illustrate how a diagram of the thermal fluid distribution assembly for thermal systems for a circuit described in figures, from 1 to 4 can be reversed. 21 indicates the boiler, 24 the burner, and 23 the main pump or electric circulator to increase heating fluid circulation in the circuit.

In figures 13, 14, 15 and 16 a thermal fluid distribution assembly is illustrated, with manifolds 1 and 2 arranged side by side and in parallel, a layout that can be advantageously employed in a thermal system to feed several circuits, (with or without a mixing valve) with a central thermal fluid distribution assembly.

For components to be interchangeable, the assembly made up of feed and return piping 32 and 33 is not changed, in particular the center distance between the intakes 7 and 8 will always remain the same as the center distance of the aligned manifolds, this in order to have interchangeable prefab parts as well as to allow for subsequent insulation.

Manifolds 1 and 2 have their end portions closed by disks or end plates 3.

On manifold 1 the following components are installed one after the other: the feed pipe 4 from the boiler 21, possibly or alternatively a fitting 19 for a second circuit, a first feed piping 32 to a first circuit using the fluid and a second feed piping 32' to a second circuit using the fluid.

On manifold 2 the following components are installed one after the other: the return pipe 5 to the boiler 21, possibly or alternatively a fitting 19 for a second circuit, a first return piping 33 from a first circuit using the fluid and a second return piping 33' from a second circuit using the fluid.

Similarly to what has already been illustrated above, on the feed piping 32 to the circuits using the fluid the following components are installed one after the other: an intake 7 on manifold 1, a shut-off valve 9, a connection pipe segment 10, a three-way mixing valve 11 and a pipe segment 12 for connection with an electric circulator or main pump 23.

On the connection pipe segment 10, two fittings 14 are placed on diametrically opposite positions to blow off and load the corresponding circuit.

On return piping 33 from the circuit using the fluid the following components are installed one after the other: an intake 8 on manifold 2, a check valve 17, a shut-off valve 9, a connecting pipe 20 between said shut-off valve 9, the three-way mixing valve 11, and the return circuit from the system. On the connecting pipe 20, two fittings 14 are placed on diametrically opposite positions to blow off and load the circuit.

In the lower portion of each assembly, and aligned with the feed 4 and return pipes 5 of the boiler 21, a condensate drain pipe 6 is fitted. On the lower side of each manifold 1 and 2 a fitting 16 is placed for the blow off unit.

As indicated in figure 17, when the piping is to be connected on site with the fittings available on the thermal fluid distribution assembly, in a different way from the layout indicated in the figures, it is enough to rotate with a 180° rotation the various components A, B and C, which are indicated within the areas outlined by the dotted lines.

With this simple operation the fittings can be reversed to fit the corresponding circuits and the individual components.

Figure 18 shows an application diagram for a thermal fluid distribution assembly for several circuits with manifolds arranged side by side, as described in the figures from 13 to 17, in particular for a thermal system of three buildings.

In this figure 18, every circulation pump of each heating circuit is indicated with 23, the sanitary water heat exchanger with 26, the cold water inlet from the water pipeline to the heat exchanger 26 is indicated with 27. Shut-off valves placed on the feed 4 and return pipe 5 of the boiler 21 are marked with 42 and 41, and the shut-off valves placed between each thermal fluid distribution assembly and each circuit are marked with 43 and 44.

## Claims

1. Assembly for thermal systems **characterized by** the fact that it consists of a thermal fluid distribution assembly for one or more circuits, designed to be connected with a heat generator or a thermal exchanger, that it is pre-assembled and featuring specially arranged and interchangeable parts, consisting of two manifolds (1, 2) that are aligned or placed side by side, and that a first portion of the feed pipe (4) from a boiler (21) and an end portion of the return pipe (5) to the boiler (21) are fitted on the upper portion of these manifolds, of one or more assemblies consisting of a first portion of a feed piping (32) to a circuit using the fluid, and an end portion (33) of a return piping from the circuit using the fluid, which includes the essential elements, such as a three-way mixing valve (11) and a connecting pipe (13, 20) between the three-way mixing valve (11) and the end portion of the return piping (33), and by the fact that in the lower portion of the distribution assembly, and aligned with the feed pipe (4) and the return pipe (5) of the boiler (21), a condensate drain pipe (6) is fitted and set to be connected with a condensate pump (22).

2. Assembly according to claim 1, **characterized by** the fact that the feed piping to the circuit (32) is fitted on the manifold (1) with an intake (7), and that the following components are installed one after the other: a shut-off valve (9), a connection pipe segment (10) between said valve (9) and a three-way mixing valve (11), a pipe segment (12) for connection with an electric circulator (23) on the feed circuit to the system, and by the fact that the return piping (33) from the circuit is fitted on the manifold (2) with an intake (8), and that the following components are installed one after the other: a shut-off valve (9) and a connecting pipe (13) between said shut-off valve (9) the three-way mixing valve (11), and the return circuit from the system.

3. Assembly according to claim 1, **characterized by** the fact that the condensate drain pipe (6) is fitted with a blow off unit (16) and that the condensate pump (22) is mounted between two shut-off valves (9).

4. Assembly according to claim 1, **characterized by** the fact that the manifolds (1, 2), when aligned, have their end portions closed by at least a disk or end plate (3) and that they share one common intermediate disk or end plate (3').

5. Assembly according to claim 1, **characterized by** the fact that in the lower portion of the distribution assembly, two blow-offs fitted with valve (18) are mounted, instead of a condensate drain pipe (6), that are aligned, respectively, with the feed pipe (4) and the return pipe (5) of the boiler (21).

6. Assembly according to claim 1, **characterized by** the fact that on the two manifolds (1, 2) two fittings (19) are mounted for connection with a second circuit, and that on the return piping from the circuit (33) after the intake (8) the following elements are fitted: a check valve (17), a shut-off valve (9), a connecting pipe (20) between the shut-off valve (9), the three-way mixing valve (11), and the return circuit from the system.

7. Assembly according to claim 1, **characterized by** the fact that two manifolds (1, 2) are placed in parallel side by side, and that the following elements are fitted on them: a feed (4) and a return pipe (5) of the boiler (21), at least one assembly consisting of feed (32) and return piping (33) of the circuits using the fluid and/or at least two fittings (19) for a second circuit.

8. Assembly according to claim 1, **characterized by** the fact that the joints between the various elements are flanged, threaded or welded.

9. Assembly according to claim 1, **characterized by** the fact that on the feed (4) and on the return (5) pipes of the boiler (21) at least one fitting (15) is placed for sensors.

10. Assembly according to claim 1, **characterized by** the fact that on the connection pipe segment (10) two fittings (14) are installed in diametrically opposite positions to blow off and/or load the circuit.

11. Assembly according to claim 1, **characterized by** the fact that it is reversible.

12. Assembly according to claim 1, **characterized by** the fact that the manifolds (1, 2) consist of two steel cylinders, with a diameter which is greater than the diameter of the pipes they feed or by which they are fed, and that the elements making up the assembly have been predimensioned depending on the capacity of the thermal system they will be mounted on.

13. Assembly according to claim 1, **characterized by** the fact that it is produced in different sizes, with the assembly piping having a 2" diameter and a 1 1/2" three-way valve when employed on systems of up to approximately 220,000 kcal capacity, with piping of 2 1/2" diameter and a 2" three-way valve when employed on systems of up to 350,000 kcal capacity, and with 3" diameter piping and a 2 1/2" three-way valve with systems of up to 500,000 kcal capacity, and that the manifolds (1, 2) have a 4" diameter.
